# EUROPEAN PATENT APPLICATION

(11) **EP 4 810 138 A1**
(43) Date of publication of application: **23.09.2026**
(21) Application number: 25305392.0
(22) Date of filing: 20.03.2025
(51) Int. Cl.: A63F 13/285, G06F 3/01

(54) **METHOD AND APPARATUS FOR LAYER-BASED HAPTIC SPATIALIZATION**

(71) Applicant: InterDigital CE Patent Holdings, SAS, 75017 Paris (FR); INRIA - Institut National de Recherche en Informatique et en Automatique, 78150 Le Chesnay (FR)
(72) Inventor: GALVANE, Quentin, 35235 THORIGNE-FOUILLARD (FR); LECUYER, Gurvan, 35000 RENNES (FR); ROY, Tom, 35510 CESSON-SEVIGNE (FR)
(74) Representative: Interdigital

(57) **Abstract**

A system for haptic spatialization introduces the notion of a haptic source, haptic medium and haptic listener. A haptic source is a virtual transmitter that is able to provide haptic information. A haptic medium is an object with haptic properties based on physical characteristics, to modulate the propagation of a haptic signal through the object. A haptic listener is a virtual sensor that captures haptic information. A haptic engine handles the workflow and interactions between these different elements of the system. More particularly, it determines how a haptic signal is propagated according to the spatial localization and the properties of the elements. In addition, the propagation depends on haptic layers that correspond to different contexts. Syntax elements describing the elements composing such system allow to create information representative of a scene comprising spatialized haptic effects. Such information can be provided to a rendering device in order to be played back accordingly.

## Description

### TECHNICAL FIELD

At least one of the present embodiments generally relates to content representation and more particularly to a system allowing to handle layer-based spatialized haptic effects.

### BACKGROUND

Haptics refers to sense of touch and includes two dimensions, tactile and kinesthetic. The first relates to tactile sensations such as friction, roughness, hardness, temperature and is felt through the mechanoreceptors of the skin (Merkel cell, Ruffini ending, Meissner corpuscle, Pacinian corpuscle). The second is linked to the sensation of force/torque, position, motion/velocity provided by the muscles, tendons and the mechanoreceptors in the joints.

Haptic can be experienced in movie theaters through 4DX movie. Haptic is an additional track played along with video and audio to augment movie experiences. Haptic is also commonly used in interactive experiences, such as video games or virtual reality (VR) experiences, to enhance the immersion feeling. Providing haptic feedback when interacting with virtual object provides a natural feeling that adds a new layer of realism in the experience.

For interactive experiences in virtual environments, the use of haptic is becoming more and more popular but the integration of this new media remains limited. Most of the videogames and VR experiences are created using game engines such as Unity, or Unreal Engine. Over the past years, those game engines have made tremendous progress on various aspects (image quality, sound, scene complexity...) but they only provide yet very basic support for haptic. For example, only the most common game controller is supported natively by the mainstream game engine, providing simple haptic capabilities limited to vibration in the hand.

Haptic is gaining growing popularity with the release of numerous mass market haptic devices. This broadening range of consumer haptic devices comes with the need for better integration of haptic capabilities in game engine to better support the creation of immersive content. One of the big challenges that could leverage haptic capabilities is the support of haptic spatialization in applications.

### SUMMARY

A first aspect of at least one embodiment is directed to a method comprising obtaining haptic elements associated with a content, the haptic elements comprising at least one haptic source, at least one haptic medium, and at least one haptic listener, obtaining one or more haptic layer associated with at least one of a haptic source, a haptic medium or a haptic listener, for a haptic listener, selecting a set of haptic mediums that allows to establish a link between the at least one haptic source and the haptic listener, for a haptic medium and for a haptic layer: selecting a propagation function associated with the haptic layer, and determining a haptic effect resulting of the application of the propagation function on the at least one haptic source to the haptic listener, and providing the haptic effect to a haptic rendering engine, wherein the haptic elements are associated with a spatial localization within a scene.

A second aspect of at least one embodiment is directed to an apparatus comprising a processor configured to obtain haptic elements associated with a content, the haptic elements comprising at least one haptic source, at least one haptic medium, and at least one haptic listener, obtain one or more haptic layer associated with at least one of a haptic source, a haptic medium or a haptic listener, for a haptic listener, select a set of haptic mediums that allows to establish a link between the at least one haptic source and the haptic listener, for a haptic medium and for a haptic layer: select a propagation function associated with the haptic layer, and determine a haptic effect resulting of the application of the propagation function on the at least one haptic source to the haptic listener, and provide the haptic effect to a haptic rendering engine, wherein the haptic elements are associated with a spatial localization within a sceneA third aspect of at least one embodiment is directed to a computer program comprising program code instructions executable by a processor, the computer program implementing at least the steps of a method according to the first aspect.

A fourth aspect of at least one embodiment is directed to a computer program product stored on a non-transitory computer readable medium and comprising program code instructions executable by a processor, the computer program product implementing at least the steps of a method according to the first aspect.

A fifth aspect of at least one embodiment is directed to a non-transitory computer readable medium comprising data elements for describing at least one haptic scene, the data elements comprising at least one haptic source, at least one haptic medium, at least one haptic listener, and at least one haptic layer associated with at least one of a haptic source, a haptic medium or a haptic listener, and wherein haptic sources, haptic mediums, haptic listeners are associated with spatial localizations within the haptic scene.

### BRIEF DESCRIPTION OF THE DRAWINGS

The present disclosure may be better understood by consideration of the detailed description below in conjunction with the accompanying figures in which:
Figure 1 illustrates a block diagram of an example of system in which various aspects and embodiments are implemented.
Figure 2 illustrates principles of a propagation of a haptic signal within a system for haptic spatialization.
Figure 3 illustrates an example of data structure for a MPEG_spatial_haptic extension within a system for haptic spatialization.
Figure 4 illustrates an example of data structure for a MPEG_spatial_haptic extension within a system for haptic spatialization with layers according to embodiments.
Figure 5 illustrates how the example of data structure of figure 4 is processed by the rendering pipeline.
Figure 6 illustrates an example of method for decoding information representative of spatialized haptic effects with layers according to embodiments.

It should be understood that the drawings are for purposes of illustrating examples of various aspects, features and embodiments in accordance with the present disclosure and are not necessarily the only possible configurations.

### DETAILED DESCRIPTION

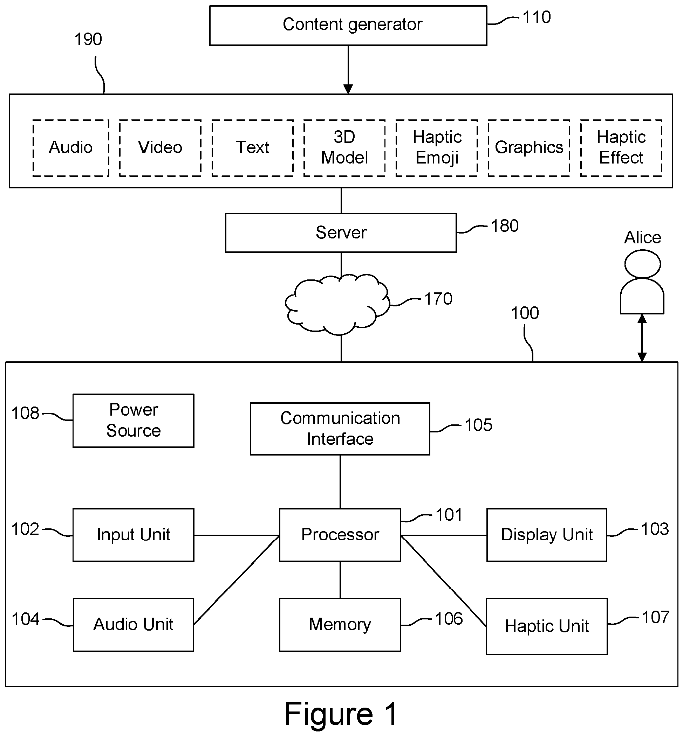

**Figure 1** illustrates a block diagram of an example of system in which various aspects and embodiments are implemented. In the depicted system, the user Alice uses the rendering device 100 to interact with a server 180 providing a content 190 through a communication network 170. This content 190 may take many different forms and may comprise various data and/or files such as audio data, video data, text, graphics required for its rendering. It may comprise haptic effects, and more particularly information related to the spatialization and propagation of haptic effects. The content 190 may be generated under control of a content generator 110 that may take different forms according to different context of usage. For example, when the content is a written document, the content generator may be implemented for example as an edition software running on a computer or server. When the content is a flow of interpersonal interactions (E.g., SMS) or social media interactions (E.g., WhatsApp, Twitter), the content generator may be implemented for example as an interaction manager software running on a computer.

The rendering device 100 is an apparatus that comprises a processor 101. The processor 101 may be a general-purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. The processor may perform data processing such as haptic signal decoding, input/ output processing, and/or any other functionality that enables the device to operate in an immersive system.

The processor 101 may be coupled to an input unit 102 configured to convey user interactions. Multiple types of inputs and modalities can be used for that purpose. A physical keypad and a touch sensitive surface are typical examples of input units adapted to this usage although voice control could also be used. In addition, the input unit may also comprise a digital camera able to capture still pictures or video in two dimensions or a more complex sensor able to determine the depth information in addition to the picture or video and thus able to capture a complete 3D representation. The processor 101 may be coupled to a display unit 103 configured to output visual data to be displayed on a screen. Multiple types of displays can be used for that purpose such as a liquid crystal display (LCD) or organic light-emitting diode (OLED) display unit. The processor 101 may also be coupled to an audio unit 104 configured to render sound data to be converted into audio waves through an adapted transducer such as a loudspeaker for example. The processor 101 may be coupled to a communication interface 105 configured to exchange data with external devices. The communication preferably uses a wireless communication standard to provide mobility of the rendering device, such as cellular (e.g., LTE) communications, Wi-Fi communications, and the like. The processor 101 may access information from, and store data in, the memory 106, that may comprise multiple types of memory including random access memory (RAM), read-only memory (ROM), a hard disk, a subscriber identity module (SIM) card, a memory stick, a secure digital (SD) memory card, any other type of memory storage device. In embodiments, the processor 101 may access information from, and store data in, memory that is not physically located on the device, such as on a server, a home computer, or another device.

The processor 101 is coupled to a haptic unit 107 configured to provide haptic feedback to the user (e.g.: vibrations), defined by the haptic effect described in the content 190. The haptic unit 107 may comprise a single haptic actuator or a plurality of haptic actuators located at a plurality of positions on the rendering device. Different haptic units may have a different number of actuators and/or the actuators may be positioned differently on the rendering device. A haptic unit may be integrated in the device or may be provided as a separate device. The haptic engine and rendering engine described below may be implemented by the processor 101, or by a separate processor (not depicted) or in separate devices.

In at least one embodiment, the processor 101 is configured to render a haptic signal according to embodiments described further below, in other words to apply a low-level signal to a haptic actuator to render a haptic effect. Such low-level signal may be represented using different forms, for example by metadata or parameters in the description file or by using a digital encoding of a sampled analog signal (e.g., PCM or LPCM).

The processor 101 may receive power from the power source 108 and may be configured to distribute and/or control the power to the other components in the device 100. The power source 108 may be any suitable device for powering the device. As examples, the power source may include one or more dry cell batteries (e.g., nickel-cadmium (NiCd), nickelzinc (NiZn), nickel metal hydride (NiMH), lithium-ion (Li-ion), and the like), solar cells, fuel cells, and the like.

While the figure depicts the processor 101 and the other elements 102 to 108 as separate components, it will be appreciated that these elements may be integrated in an electronic package or chip. It will be appreciated that the rendering device 100 may include any subcombination of the elements described herein while remaining consistent with an embodiment. In addition, although the rendering device is presented as a standalone apparatus, it may also be implemented as a combination of different apparatuses. The processor 101 may further be coupled to other peripherals or units not depicted in figure 1 which may include one or more software and/or hardware modules that provide additional features, functionality and/or wired or wireless connectivity. For example, the peripherals may include sensors such as a universal serial bus (USB) port, a vibration device, a television transceiver, a hands-free headset, a Bluetooth^{®} module, a frequency modulated (FM) radio unit, a digital music player, a media player, a video game player module, an Internet browser, and the like.

Typical examples of a rendering device 100 are smartphones, tablets, computers, game/AR/VR controllers, headphones, or any other object with integrated haptic capabilities able to render a haptic effect.

Other examples of rendering devices 100 do not comprise any haptic capabilities but are in relation with one or more device able to render a haptic effect such as haptic gloves, haptic chairs, haptic props, motion platforms. In this case, the rendering device 100 may prepare data for rendering the haptic effect so that another device, such as a haptic prop, can perform the haptic rendering. Examples of such devices are television sets, head-mounted displays, gamepads, or laptops.

In at least one embodiment, the device does not include a display unit, nor does it include a haptic unit. In such embodiment, the device does not visually render the content 190 and does not render the associated haptic effects. However, the device may prepare data for display so that another device, such as a screen, can perform the display and may prepare data for rendering the haptic effect so that another device, such as a haptic prop, can perform the haptic rendering. Examples of such devices are computers, game consoles, optical media players, or set-top boxes.

In at least one embodiment, the content 190 and associated elements are directly hosted in memory 106 of the rendering device 100 allowing local rendering and interactions. In a variant of this embodiment, the device 100 also comprises the content generator 110 allowing a fully standalone operation, for example without needing any communication network 170 and server 180.

To address the topic of spatialization in immersive haptic experiences, a first system introduced the concepts of haptic sources, haptic listeners and haptic medium, along with a proposed implementation based on extensions to the glTF standard introduce above. In such system, a haptic medium is a virtual object with haptic properties. A haptic medium is associated with a node of the scene and its associated geometry. The same node may also be associated with haptic sources and haptic listeners. The main objective of a haptic medium is to modulate and transfer (propagate) haptic information based on its haptic properties (i.e. physical properties). A haptic medium may define a list of supported modalities, the physical properties of the material and propagation functions for different haptic modalities. A haptic source is an element of the virtual scene that emits a haptic signal. It is associated with a node of the scene and may be linked to the geometry associated with the node. The haptic data of a source is defined by a list of haptic medias. A haptic media may define haptic data for a vibration signal, a temperature, a movement or any other haptic modality. It is defined with a reference to a buffer associated with a media file containing the haptic data (such as a HJIF file, a HMPG file). The media may also specify information on how and when to play the haptic data. A haptic media may have different states. It could be activated or not. If the haptic effect is activated and playing, the haptic source emits the associated haptic signal that can then be propagated through haptic mediums. A haptic listener is an element of the scene that captures haptic information received from haptic sources. It is typically associated with a haptic device in the real world. It may be used to capture all the haptic data but it may also be restricted to specific haptic modalities.

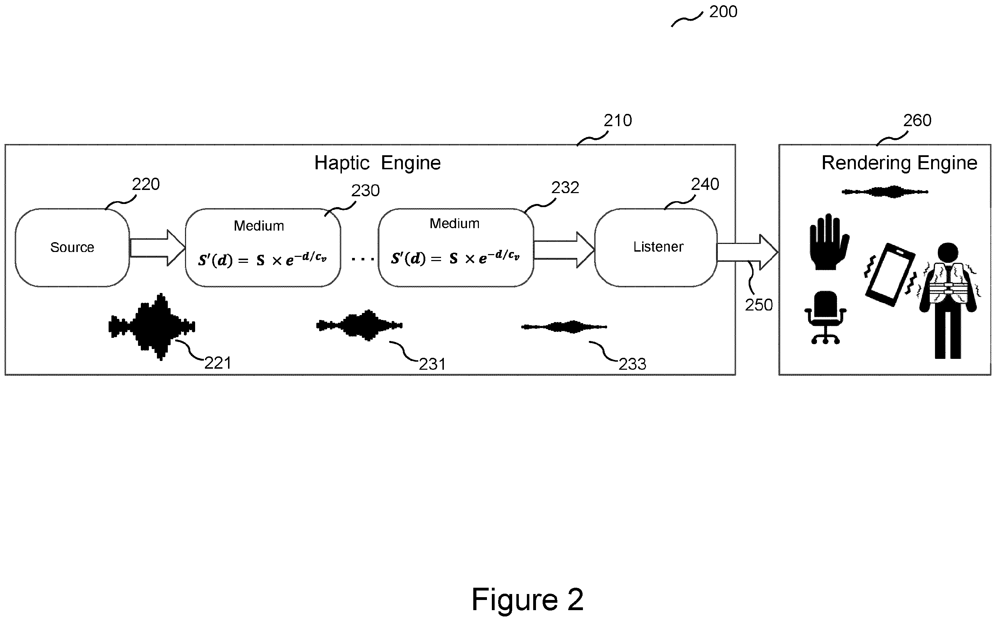

**Figure 2** illustrates principles of a propagation of a haptic signal within a system for haptic spatialization. In this example, the system 200 comprises a haptic engine 210 and a rendering engine 250. The haptic engine 210 is in charge of determining (E.g., computing) the haptic signal transmitted to each haptic listener in the scene. It uses the geometric information of the scene to establish the relation between haptic listeners and haptic sources. If a haptic listener is linked to a haptic source through one or more haptic mediums, the haptic engine uses the physical properties, and the propagation functions defined for each haptic medium to modulate the haptic signal emitted by the haptic sources. If there are several haptic mediums in between a source and listener, the haptic effect is propagated through each object starting from the source and the signal is therefore iteratively modulated. In the example of the figure, a single haptic source 220 provides a haptic signal 221. The haptic listener 240 is linked to the haptic source through the haptic mediums 230 and 232. Based on the haptic properties of the haptic medium 230, the haptic engine 210 determines the haptic signal 231 and then, based on the haptic properties of the haptic medium 232, it determines the haptic signal 233 for the haptic listener 240. The haptic engine outputs the signal 250 captured by the listener to the rendering engine 260 that will play the haptic feedback on the devices. This example comprises a single haptic source so that the haptic signal 250 is identical to the signal 233. This is not the case in more complex situations using multiple haptic sources. When a haptic listener is associated with multiple haptic sources, the haptic engine may compute separately the modulated signals from the different haptic sources and either aggregate them (E.g., through a simple addition in the case of a same modality) or provide them separately to the rendering engine that will carry out the mixing or provide them to different haptic actuators. Indeed, multiple actuators rendering different modalities (E.g., vibration, temperature, pressure) may be needed to render the data received from the haptic engine. When there are several haptic listeners in the scene, the same operation has to be carried out independently for each haptic listener.

A haptic medium represents a virtual object with haptic properties. It is used to modulate and transfer haptic information based on its haptic properties (i.e. physical properties) that comprise parameters such as the list of haptic modalities that the object can transmit thermal conductivity or vibrotactile mediation for example. A non-exhaustive list is proposed in Table 2 below. Other properties may be added to the system to allow other types of modulation of the signal or address additional haptic modalities. In addition to these properties the haptic medium is also associated with a spatial localization that provides a position and orientation of the haptic medium within a haptic scene.

The haptic medium may also specify how to use these properties to modulate the input haptic signal based on the propagation distance, time or other variables. The propagation function may be specified in different manners. A first solution consists in using URNs, where each URN would uniquely identify a propagation function. For instance a URN urn:haptic-propagation:VibrationExponentialAttenuation could be defined with the following formula: $S ′ \left(d\right) = S \times {e}^{- \frac{d}{{c}_{v}}}$ where S is the input signal, S' is the modulated signal, d is the propagation distance and *cᵥ* is the vibrotactile conductivity. The input signal can then be modulated by the renderer using this formula to output an attenuation function. This solution requires that the rendering engine has implemented the function specified in the URN. A second solution is to allow users to define their own custom functions directly into the object. This solution is more flexible and could be integrated using a simple string. This solution requires to precisely specify how to interpret the function. This could be done by relying on regular expressions to constrain the custom function and ensure it can be interpreted by the rendering engine. Specific keywords identifying the input, output, parameters and variables must be defined and the mathematical symbols and formulation of the function must be known and standard (based on ISO-80000-2:2019 for instance) so that any engine can interpret it. Equation (1) could be used directly as a custom function. The renderer would then have to interpret the function first to be able to render it.

Although the haptic mediums allow to establish a relation (E.g., a link) between the different elements (for example between one haptic source and one haptic listener, or between one haptic source and another haptic medium, or between one haptic medium and a haptic listener), this relation is not explicitly defined by syntax elements. It is the haptic engine that determines if a relation exists based on the geometry of the scene (i.e. position, orientation and shape of all the objects in the scene). For each listener in the scene the haptic engine identifies every source in direct relation or indirect relation (i.e. through one or multiple haptic mediums) with the listener and modulates the haptic signals based on the characteristics of the haptic mediums through which it was propagated. For example, in the situation where a user is resting his hands on a table and a falling object impacts the table in proximity of the right hand, the haptic engine will determine that the hands are linked to the object through the table. A vibration may be felt in both hands depending on the characteristics of the table. If the impact is strong, both hands are close and the table is metallic, the impact should be conveyed to both hands and a strong vibration may be provided to both hands as there is a link between the haptic source (the impact) and the haptic listeners (right hand and left hand). If the hands are far apart and the table is made of wood, both hands may receive a vibration, but the intensity of the vibrations received by the left hand will be weaker as it is further away from the source. If another character is standing in the same room but does not touch the table, there will be no link between the haptic source of the impact and this character since their respective geometric parameters do not share a contact point.

Specific haptic medium can be defined such as the "Air". It can be defined as a haptic medium that may receive and sent haptic information by emission into the space. The air can transmit haptic information according to a distance, an angle and other parameters.

A haptic source represents an element of the virtual scene that emits a haptic signal. A haptic source may be an element of the scene that only transmit its own haptic data, but it may also be at the same time a haptic medium that propagates haptic data coming from other sources. The haptic data of the source may be defined using a parametric representation or it may be stored using haptic medias. A haptic source may be placed in the virtual environment by a designer or created at runtime based on an interaction or an event. The haptic source may for instance be created following the collision of two haptic mediums. The haptic source is also associated with a spatial localization that provides a position and orientation of the haptic medium within a haptic scene.

A haptic source may define multiple haptic effects. For instance, the engine of a car may be associated with both vibration data and temperature data. This information could be stored in a single file or split into separate haptic medias. The haptic source handles and transmit the data of all its associated haptic effects.

A haptic effect may be composed of one or several signals (potentially with multiple channels). It may define haptic data for a vibration signal, a temperature, a movement or any other haptic modality. It may be defined with a parametric representation (e.g. similar to the JSON parametric representation proposed in the HJIF format for instance) or simply with a reference to a media file containing the haptic data (such as a HJIF file, a HMPG file, a WAV file, or any other haptic file). The effect may also specify information on how and when to play the haptic data. For instance, it may indicate a range (i.e. maximum distance), whether or not the effect should be repeated and the frequency at which it should be repeated, an intensity gain or the spatial density (i.e. how localized is the effect). It may also constrain the direction and shape of the emission (e.g. sphere, cone cylinder). A Haptic Effect may have different states. It could be activated or not. If the haptic effect is activated and playing, the haptic source emits the associated haptic signal that can then be propagated through haptic mediums.

A haptic listener represents a virtual sensor capturing haptic information received from haptic sources in the scene. It may be a haptic medium that can transmit haptic information, or it may be an element of the scene that only receives haptic data. It is typically associated with a haptic rendering device in the real world. It can be used to capture all the haptic data, but it may also be restricted to specific haptic modalities or limited to specific ranges (in terms of amplitude or frequency for instance). The haptic source is also associated with a spatial localization that provides a position and orientation of the haptic medium within a haptic scene.

The system for haptic spatialization presented herein may be implemented as an extension to the MPEG-I Scene description specification (ISO/IEC 23090-14 amd 2). The MPEG_Haptic extension as defined in the specification may be updated to support the embodiments for haptic spatialization. Indeed, the haptic extension currently only allows to attach haptic data indirectly to objects in the scene through the interactivity extension. Embodiments propose to define the key components required for spatialized haptics directly in the MPEG _haptic extension.

Table 1 describes the semantic of the MPEG_haptic extension at the node level.

**Table 1**

| **Name** | **Type** | **Default** | **Description** | **Required** |
|---|---|---|---|---|
| hapticMediums | Array<MPEG_Hap tics.hapticObject> | N/A | Provides a list of haptic mediums at the glTF file level to enable haptic support | Yes |
| hapticSources | Array<MPEG_Hap tics.hapticSource> | N/A | Provides a list of haptic sources at the glTF file level to enable haptic support | Yes |
| hapticListeners | Array<MPEG_Hap tics.hapticListener> | N/A | Provides a list of haptic listeners at the glTF file level to enable haptic support | Yes |

Each element of the hapticMediums array defines a medium with its properties and propagation functions. A medium defines the list of supported modalities as well as properties such as the thermal conductivity or vibrotactileMediation. Table 2 describes the semantic of haptic mediums.

**Table 2**

| **Name** | **Type** | **Default** | **Description** | **Required** |
|---|---|---|---|---|
| hapticModalities | array<Enumeration > | N/A | List of haptic modalities that can be propagated through the medium. Possible values are described in Table 4. An empty list means that all modalities may be transmitted. | Yes |
| thermalConductiv ity | Number | N/A | Thermal conductivity of the medium expressed in W/(m·K). | No |
| vibrotactileMedia tion | Number | N/A | Vibrotactile properties to be | No |
| propagationFuncti ons | array <PropagationF unction> | N/A | List of propagation functions to use for the different supported haptic modalities. If no propagation function is specified for a haptic modality, the haptic signal is transmitted without any modification (i.e. the propagation function is the identity) | Yes |

The semantic defining a propagation function is detailed in Table 3. The propagation function may be specified in multiple ways. One solution consists in using URNs, where each URN would uniquely identify a propagation function. Another solution is to allow users to define their own custom functions directly into the object with a simple string.

**Table 3**

| **Name** | **Type** | **Default value** | **Description** | **Required** |
|---|---|---|---|---|
| hapticModality | Enumeration | N/A | Haptic modality for which the propagation function is defined. | Yes |
| | | | Possible values are described in Table 4. | |
| function | string | urn:haptic-propagation :identity | Function is a URN uniquely identifying what propagation function to use. For each URN, proper formulas shall be provided indicating what are the parameters (i.e. distance, time, ...) and how to use the haptic medium properties. | No |
| customFunction | string | "S'=S" | Custom function defining how a haptic signal is modulated based on the specified parameter. | No |

Table 4 describes the supported haptic modalities.

**Table 4**

| |
|---|
| Pressure = 0 |
| Acceleration |
| Velocity |
| Position |
| Temperature |
| Vibrotactile |
| Water |
| Wind |
| Force |
| Electrotactile |
| Vibrotactile Texture |
| Stiffness |
| Friction |
| Other |

Table 5 details the semantics of a haptic source. A source is simply characterized by a list of haptic medias.

**Table 5**

| **Name** | **Type** | **Default** | **Description** | **Required** |
|---|---|---|---|---|
| hapticMedias | Array<HapticMedia> | N/A | List of haptic medias associated with a source | Yes |

The semantic of haptic medias is detailed in Table 6. In the context of MPEG, the haptic data associated with a haptic media is stored in the MPEG_media.media array and can be referenced through glTF accessors. A media is also associated with a haptic modality and a state (enable, disabled). Additional properties such as Media Control properties may be added.

**Table 6**

| **Name** | **Type** | **Default** | **Description** | **Required** |
|---|---|---|---|---|
| hapticMedia | Accessor | N/A | Accessor to a media source in MPEG_media.media array containing haptic media files. | Yes |
| hapticModality | Enumeration | N/A | Haptic modality for which the propagation function is defined. Possible values are described in Table 4. | Yes |
| mediaState | enumeration | "Disabled" | State of the haptic media. Possible values are | No |
| | | | Enabled | |
| | | | Disabled | |
| | | | ... | |

Table 7 details the properties of haptic listeners.

**Table 7**

| **Name** | **Type** | **Default** | **Description** | **Required** |
|---|---|---|---|---|
| hapticModality | Array<enumeration> | N/A | List of haptic modalities that can be captured by the listener. Possible values are described in Table 4. An empty list means that all modalities are captured by the listener. | Yes |

With the MPEG_spatial_haptic extension, the haptic data of an object may be directly attached to a node. The extension at the node level references elements defined at the glTF file level. The semantic of the MPEG_haptic extension at the node level is detailed in Table 8.

**Table 8**

| **Name** | **Type** | **Default** | **Description** | **Required** |
|---|---|---|---|---|
| hapticMediums | Array<MPEG_spatial _haptics.NodeMedium > | N/A | Reference to an item in the hapticObject array of the MPEG_haptic extension defined at glTF file level | Yes |
| hapticSources | Array<MPEG_spatial _haptics.NodeSource> | N/A | Reference to an item in the hapticSource array of the MPEG _haptic extension defined at glTF file level | Yes |
| hapticListeners | Array<MPEG_spatial _haptics.NodeListener > | N/A | Reference to an item in the hapticListener array of the MPEG _haptic extension defined at glTF file level | Yes |

The semantic of the NodeMedium elements is detailed in Table 9. It contains an index referencing an element of the hapticMediums array of the extension defined at the glTF file level. Additional properties of the medium at the node level should be investigated.

**Table 9**

| **Name** | **Type** | **Default** | **Description** | **Required** |
|---|---|---|---|---|
| index | Integer | N/A | Reference to an item in the hapticMediums array of the MPEG_spatial_haptic extension defined at glTF file level | Yes |

The semantic of the NodeSource elements is detailed in Table 10. It contains an index referencing an element of the hapticSources array of the extension defined at the glTF file level. A property indicating the precise location and shape of the source still has to be defined. Additional properties of the source at the node level should be investigated.

**Table 10**

| **Name** | **Type** | **Default** | **Description** | **Required** |
|---|---|---|---|---|
| index | Integer | N/A | Reference to an item in the hapticSources array of the MPEG_spatial_haptic extension defined at glTF file level | Yes |
| instanceLocation/shape | TBD | TBD | TBD | TBD |

The semantic of the NodeListener elements is detailed in Table 11. It contains an index referencing an element of the hapticSources array of the extension defined at the glTF file level. A property indicating the precise location and shape of the listener still must be defined. Additional properties of the listener at the node level should be investigated (such as an id property for instance).

**Table 11**

| **Name** | **Type** | **Default** | **Description** | **Required** |
|---|---|---|---|---|
| index | Integer | N/A | Reference to an item in the hapticListeners array of the MPEG_spatial_haptic extension defined at glTF file level | Yes |
| instanceLocation/shape | TBD | TBD | TBD | TBD |

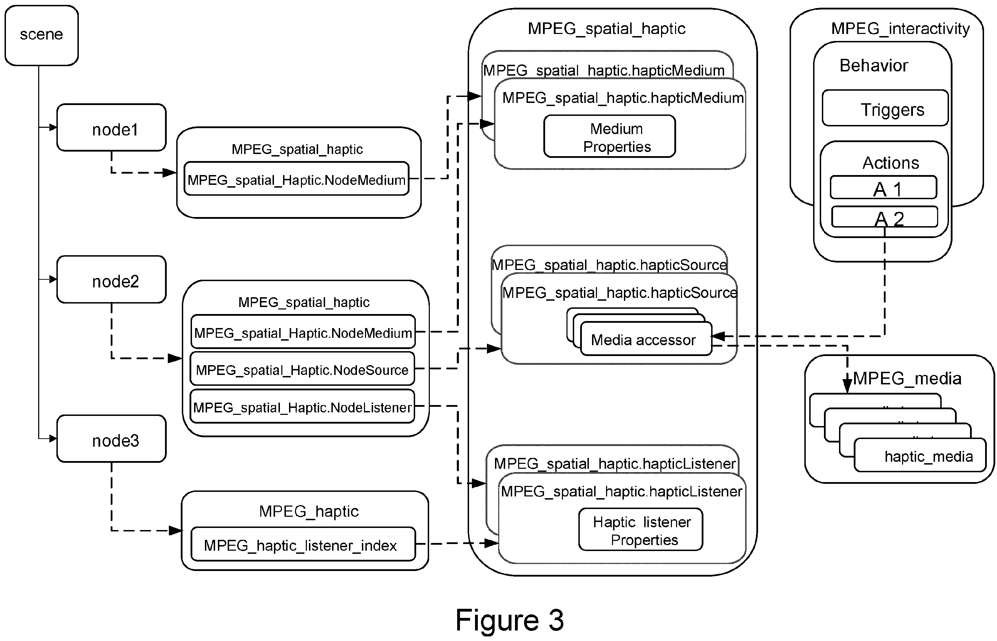

**Figure 3** illustrates an example of data structure for a MPEG_spatial_haptic extension within a system for haptic spatialization. All haptic mediums, haptic sources and haptic listeners are defined with the MPEG_spatial_haptic extension at the glTF file level. Object in the scene may then be associated with haptic mediums, haptic sources and/or haptic listeners. This solution allows to optimize data storage. If an object in the scene is duplicated, the haptic data itself is defined only once at the top level and is only referenced at the node level.

The system for haptic spatialization introduced above allows to define how a haptic signal coming from a haptic source is propagated to a haptic listener through the scene. The propagation function is defined for each object in the scene that propagates haptic data (i.e. haptic medium) and for each haptic modality. This solution implies that, for a given modality, there is only one way to propagate the haptic data through an object. While this is relevant from a physics perspective, it does not reflect most use cases for immersive experiences. Indeed, in many cases the haptic feedback propagated in the scene may have to be modulated differently, not only depending on the modality but also based on other information. For instance, some environments propose vibrotactile feedback related to user interface (UI) events or actions. Such feedback is not meant to be realistic and the propagation of this feedback throughout the scene does not have to obey the same rules and principles than the propagation of haptic signals associated with an event in the scene (e.g. an explosion happening at a distance). The propagation function of an object defined for a given modality (e.g. vibration) may not be relevant to propagate UI data. Additionally, it is quite common to deactivate part of the haptic feedback in a haptic experience. For instance, some user may prefer to remove haptic feedback associated with background event (e.g. the vibration associated with a car engine in a car simulation) to improve the perception of haptic feedback associated with punctual event (e.g. car driving over a bump in the road). In another example, some users may prefer to disable haptic feedback associated with UI notifications. This type of filtering may be based on user preferences, user capabilities or other properties related to the haptic experience itself (e.g. the capacity to perceive some haptic feedback may be related to the experience of a user in a game).

Embodiments described hereafter have been designed with the foregoing in mind and introduce the concept of haptic spatial layers. Haptic layers allow to propagate haptic data through a spatial environment according to different contexts (i.e. layers). For each context defined in the scene, the propagation of haptic data through the environment depends on the propagation properties of the materials in this layer. The concept of layer may be introduced for each element of a haptic spatialization system. It may be defined at the haptic source level to indicate that a source may send haptic data only through a given layer (or set of layers). It may be defined at the haptic medium level to restrict the propagation of haptic data through the object to specific layers only. The layer property may also be used to define multiple propagation functions for a medium and for the same modality. For instance, a propagation function may be defined to propagate vibrotactile haptic data associated with background haptic effects in a specific fashion while vibrotactile haptic data associated with explosions or other punctual event (E.g., driving over a bump in the road) may be propagated with a different propagation function. This allows for instance to make background effects less intense and make sure that the user will perceive punctual event (i.e. foreground effects) more distinctively. With this solution, user preferences may also be accounted for in the propagation function. The user may be able to provide additional parameters to be used in the propagation function. This may be useful to adjust feedback of background effects or UI events for instance according to the preference of a user. Haptic layers may also be defined at the listener level to limit the usage of some listener to specific layers only. For instance, listeners associated with the hands of a user (most likely corresponding to game controllers) may not have to capture haptic data associated with background effects but it should perceive the data from a UI layer or from punctual events (e.g. from a collision layer).

From a rendering perspective, this solution also allows to activate and deactivate certain layers based on the user setup, user preferences, haptic device capabilities or haptic device setup.

Haptic layers may be represented in different forms such as integers (each value representing a given layer), enumerations (the list of possible values is known, similar to haptic modalities), string (each layer is specified with a given name), binary mask (each layer corresponds to a bit and layers may be combined using binary operations) or any combination of these representations.

Table 12 illustrates an example of binary mask representation of layers. In this example, layers may be represented with 4 bits. Each bit is associated with a specific layer.

**Table 12**

| | |
|---|---|
| Scene | 0x0001 |
| Background | 0x0010 |
| Collisions | 0x0100 |
| UI | 0x1000 |

This solution is convenient as it allows to combine layers easily using binary operations. For instance, a listener may be associated with the UI and Collisions layers. This combination of layers can simply be defined by the mask 0x1100 and assessed using a simple binary operation: $UI & Collisions = 0 \times 0100 & 0 \times 1000 = 0 \times 1100$

In the context of the MPEG-I standard, the proposed solution could be integrated to the proposed MPEG_spatial_haptic extension. The concept of layers may be used for the haptic sources, haptic mediums and haptic listeners. An implementation of the proposed solution is described herein.

The list of layers used in a file may be defined in multiple way. It may be either predefined with a known list of values (with an enumeration for instance) are defined directly in the file itself. A hybrid approach is proposed herein. A first list of common layers that may be used in any file is identified. Such list of layers would typically be defined in a specification. An example list is defined in Table 13.

**Table 13**

| |
|---|
| Scene = 0 |
| Background |
| Collisions |
| UI |

In addition to the predefined list of possible values, custom values may be defined at the glTF file level with a list of strings as illustrated in Table 14. This solution offers the possibility to define as many additional layers as needed.

**Table 14**

| **Name** | **Type** | **Default** | **Description** | **Required** |
|---|---|---|---|---|
| hapticMediums | Array<MPEG_spatial_ haptics.Medium> | N/A | Provides a list of haptic mediums at the glTF file level to enable spatial haptic support | Yes |
| hapticSources | Array<MPEG_spatial_ haptics. Source> | N/A | Provides a list of haptic sources at the glTF file level to enable haptic support | Yes |
| hapticListeners | Array<MPEG_spatial_ haptics. Listener> | N/A | Provides a list of haptic listeners at the glTF file level to enable haptic support | Yes |
| hapticLayers | Array<string> | N/A | List of all haptic layers. | Yes |

As introduced above, the notion of layer may be defined at the haptic source level or at the medium level or at the listener level.

In at least one embodiment, the layer may be defined at the medium level. A new "hapticLayers" property may be introduced to define the list of layers through which the medium may propagate haptic data. An example of definition of such property is detailed in Table 14. The values of each element of the list may be either one of the predefined values introduced above or one of the custom values defined in the hapticLayers property of the MPEG_spatial_haptic extension introduced above.

**Table 15**

| **Name** | **Type** | **Default** | **Description** | **Required** |
|---|---|---|---|---|
| hapticModalities | Array <Enumeration> | N/A | List of haptic modalities that can be propagated through the medium. Possible values are described in Table 4. An empty list means that all modalities may be transmitted. | Yes |
| hapticLayers | Array <string> | N/A | List of haptic layers that can be used to propagate haptic data through the medium. Possible values are defined in Table 12 and in the hapticLayers properties of the MPEG_spatial_haptic extension. An empty list means that all Layers are used. | Yes |
| thermal Conductivity | Number | N/A | Thermal conductivity of the medium expressed in W/(m·K). | No |
| vibrotactileMediation | Number | N/A | Vibrotactile properties to be | No |
| propagationFunctions | Array <PropagationFunction> | N/A | List of propagation functions to use for the different supported haptic modalities. If no propagation function is specified for a haptic modality, the haptic signal is transmitted without any modification (i.e. the propagation function is the identity) | Yes |

In at least one embodiment, the layer is associated with the propagation function. This allows to define different propagation functions for the same haptic modality. Each function is associated with a specific set (one or more) of layers. For instance, a propagation function may be defined to propagate haptic signal in the scene and collision layers, and another propagation function may be defined only for UI elements. The proposed syntax allowing such embodiment is detailed in Table 16.

**Table 16**

| Name | Type | Default value | Description | Required |
|---|---|---|---|---|
| hapticModality | Enumeration | N/A | Haptic modality for which the propagation function is defined. Possible values are described in Table 4. | Yes |
| hapticLayers | array<string> | N/A | List of haptic layers that can be used to propagate haptic data through the medium. Possible values are defined in Table 12 and in the hapticLayers properties of the MPEG_spatial_haptic extension. An empty list means that all Layers are used. | Yes |
| function | string | urn:haptic-propagation :identity | Function is a URN uniquely identifying what propagation function to use. For each URN, proper formulas shall be provided indicating what are the parameters (i.e. distance, time, ...) and how to use the haptic medium properties. | No |
| customFunction | string | "S'=S" | Custom function defining how a haptic signal is modulated based on the specified parameter. | No |

In at least one embodiment, the layer may be defined for haptic sources. In such embodiment, the concept of layers may be introduced at the hapticMedia level. A hapticLayer property may be added for each haptic media associated with a haptic source. With this implementation, each haptic effect may be assigned to a specific layer and the associated signal will be propagated only through materials (i.e. mediums) that support the specified layer. The proposed syntax allowing such embodiment is detailed in Table 17.

**Table 17**

| **Name** | **Type** | **Default** | **Description** | **Required** |
|---|---|---|---|---|
| hapticMedia | Accessor | N/A | Accessor to a media source in MPEG_media.media array containing haptic media files. | Yes |
| hapticModality | Enumeration | N/A | Haptic modality for which the propagation function is defined. Possible values are described in Table 4. | Yes |
| hapticLayer | string | N/A | Haptic layers into which the media is propagated. Possible values are defined in Table 12 and in the hapticLayers properties of the MPEG_spatial_haptic extension. | Yes |
| mediaState | enumeration | "Disabled" | State of the haptic media. Possible values are | No |
| | | | Enabled | |
| | | | Disabled | |
| | | | ... | |

In at least one embodiment, the layer may be defined for haptic listeners. The hapticLayers property is used to indicate from which of the layers the haptic listener is capable of capturing haptic data. The proposed syntax allowing such embodiment is detailed in Table 17.

**Table 18**

| Name | Type | Default | Description | Required |
|---|---|---|---|---|
| hapticModalities | Array<enumeration> | N/A | List of haptic modalities that can be propagated through the medium. Possible values are described in Table 4. An empty list means that all modalities may be transmitted. | Yes |
| hapticLayers | array<string> | N/A | List of haptic layers that can be used to propagate haptic data through the medium. Possible values are defined in Table 12 and in the hapticLayers properties of the MPEG_spatial_haptic extension. An empty list means that all Layers are used. | |

In at least one embodiment, the properties may be defined at the node level in the MPEG_spatial_haptic extension.

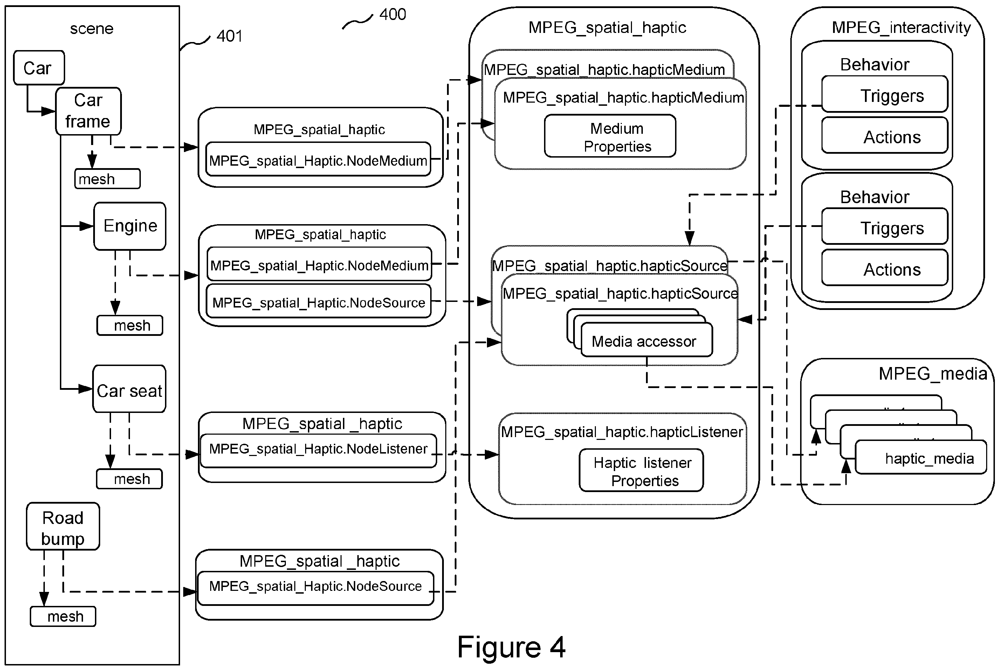

**Figure 4** illustrates an example of data structure for a MPEG_spatial_haptic extension within a system for haptic spatialization with layers according to embodiments. This data structure corresponds to an example of use case to illustrate the notion of layers. In this example a user is equipped with a haptic chair that can be used to render vibrotactile feedback. The user plays a car simulation immersive experience comprising a scene in which the car engine can be turned on and off and the user can drive on a road where a bump is located. The figure shows a simplified representation of the data structure 400 for such scene using the glTF format and the proposed extension. The scene 401 contains a car made from a car frame that holds an engine and a car seat. The engine is associated with a haptic source with a vibrotactile effect representing vibrations of a running engine. The scene also contains a road bump associated with a haptic source with a vibrotactile effect representing vibrations generated when driving over the bump. Other elements of the scene such as the 3D objects representing for example the virtual environment and the dashboard of the car are not represented in this data structure for the sake of readability. The car frame is a haptic medium that can propagate haptic data based on its haptic properties. Finally, the car seat is used as a haptic listener that will capture haptic signals from the scene. The rendering (i.e., presentation) engine maps this listener to the haptic device used for the rendering. In this case, the mapping is straightforward as the haptic device is a chair. The interaction of the user with this car simulator is handled by the MPEG_interactivity extension that will turn on and off the engine. The interactivity extension enables and disables the haptic effects of the haptic source associated with the motor when the user turns it on and off. The same interactivity extension is also used to enables the haptic feedback associated with the road bump when the virtual car drives over it, in other words, when the two virtual objects 'collide'.

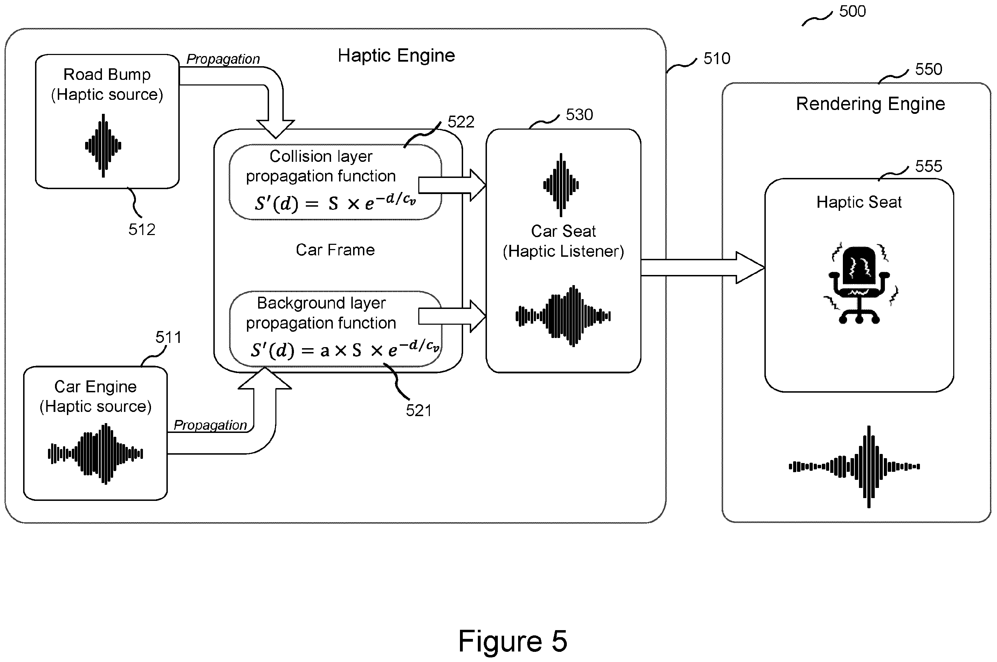

**Figure 5** illustrates how the example of data structure of figure 4 is processed by the rendering pipeline. The rendering pipeline 500 comprises a haptic engine 510 that computes the haptic signals according to the immersive experience and the rendering engine 550 that plays these haptic signals on the devices to be perceived by a user. In this example, the haptic source 511 associated with the car engine is defined in a "background" layer and the haptic source 512 associated with the road bump is defined in a "collision" layer. When the user starts the engine, the haptic signal from the engine is propagated in the scene within the "background" layer. The signal is transmitted to the seat through the car frame where the signal is modulated with a propagation function 521 specific to the background layer. To modulate the haptic signal S, the function uses the distance d between the engine and the seat through the car frame, the vibrotactile conductivity *cᵥ* of the car frame and an attenuation property a specific to the background layer. When the user drives over the road bump (collision with the road bump virtual object), the rendering of the haptic signal associated with the bump is triggered. The haptic signal from the road bump is propagated in the scene within the "collision" layer. The signal is transmitted to the seat through the car frame where the signal is modulated with a propagation function 522 specific to the collision layer. The function uses the distance d between the bump and the seat through the car frame, the vibrotactile conductivity *cᵥ* of the car frame but does not have an additional attenuation property.

The two haptic signals are captured by the haptic listener and then mixed 530 by the haptic engine in order to be rendered on the haptic chair. Due to the additional attenuation parameter of the background layer, the signal from the car engine is more attenuated than the one from the road bump. This makes the haptic feedback triggered by the collision with the bump more perceivable as it stands out from the haptic feedback triggered by the car engine.

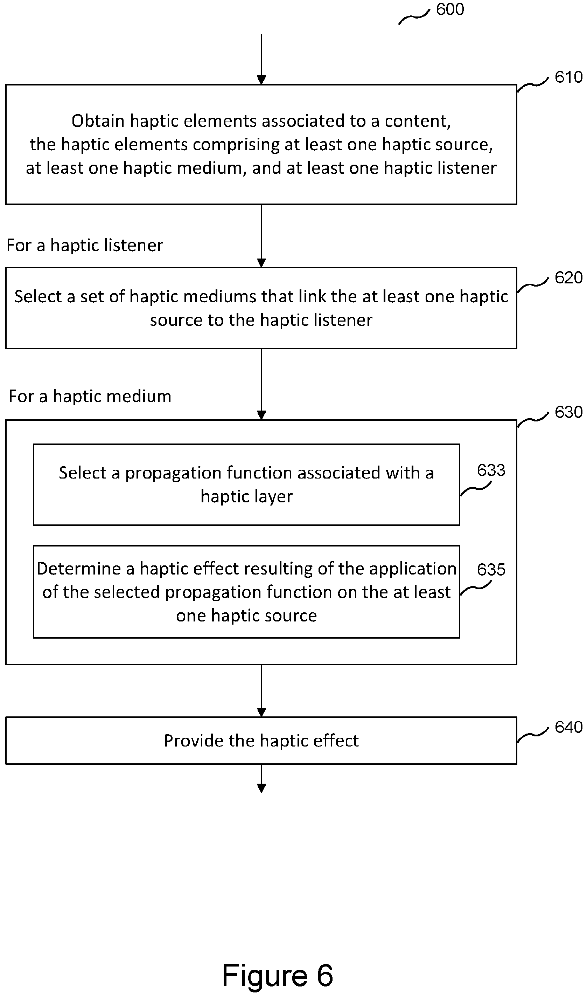

**Figure 6** illustrates an example of method for decoding information representative of spatialized haptic effects with layers according to embodiments. This process 600 is for example implemented in a rendering device 100 of figure 1 and typically executed by the processor 101 of such device. The input of this process is a data file or stream based on the syntax elements described in the tables introduced above.

In step 610, the processor obtains haptic elements associated with a content, the haptic elements comprising at least one haptic source, at least one haptic medium, and at least one haptic listener. These elements are packaged according to the syntax elements described in the tables introduced above and comprise one or more a haptic layers associated with at least one of a haptic source, a haptic medium or a haptic listener.

In step 620, for a haptic listener, the processor selects a set of haptic mediums that link the at least one haptic source to the haptic listener. This is for example done based on the spatial localization of the haptic sources, the spatial localization of the haptic listener, the spatial localization of the haptic mediums and the propagation characteristics of the haptic mediums. The shape of the objects may also be taken into account. The step 620 may be iterated over a plurality of haptic listeners.

In step 630, the processor determines a haptic effect resulting of the propagation of the at least one haptic source to the haptic listener through the selected set of haptic mediums. More particularly, a haptic listener may receive haptic data coming from different haptic sources, going through different haptic mediums. Thus, the step 630 may be iterated over a plurality of mediums and may comprise the combination of different haptic signals propagated from different haptic sources through different haptic mediums according to the haptic layer.In addition, the step 630 may also be iterated over a plurality of haptic layers. In step 633, the processor selects a propagation function used to compute the modulation of a haptic signal through a medium associated with the layer property specified by the haptic source, haptic medium or haptic listener. In step 635, the processor determines a haptic effect resulting of the application of the selected propagation function on the at least one haptic source.

In step 640, the processor provides the haptic effect, for example to a haptic rendering engine.

In summary, the process 600 comprises obtaining haptic elements associated with a content, the haptic elements comprising at least one haptic source, at least one haptic medium, and at least one haptic listener, obtaining one or more haptic layer associated with at least one of a haptic source, a haptic medium or a haptic listener, for a haptic listener, selecting a set of haptic mediums that allows to establish a link between the at least one haptic source and the haptic listener, for a haptic medium and for a haptic layer: selecting a propagation function associated with the haptic layer, and determining a haptic effect resulting of the application of the propagation function on the at least one haptic source to the haptic listener; and providing the haptic effect to a haptic rendering engine, wherein the haptic elements are associated with a spatial localization within a scene.

In at least one implementation of the process 600, a haptic source generates a haptic signal, a haptic listener captures the haptic signal as propagated from the haptic source through at least one haptic medium. In at least one implementation of the process 600, the set of haptic mediums are selected based on geometric information comprising the spatial localization and shape of the haptic sources, the spatial localization and shape of the haptic listener, the spatial localization and shape of the haptic mediums and the propagation characteristics of the haptic mediums. In at least one implementation of the process 600, a haptic medium is associated with a propagation function.

In at least one embodiment, establishing that two haptic elements are linked is done by determining if the haptic elements share at least one contact point or contact surface. When two haptic elements share a contact point or contact surface, it is considered that they are linked, and such objects may be selected in step 820. When two haptic elements do not share a contact point or contact surface, it is considered that they are not linked and thus cannot be selected in step 820.

In another implementation, if applying the propagation characteristics of the haptic mediums to the haptic sources result in the existence of a haptic signal, then such haptic medium is added to the set. If no haptic signal is remaining after the propagation through a haptic medium, then this haptic medium is not added to the set.

Although different embodiments have been described separately, any combination of the embodiments together can be done while respecting the principles of the disclosure.

Although embodiments are related to haptic effects, the person skilled in the art will appreciate that the same principles could apply to other effects such as the sensorial effects for example and thus would comprise smell, taste, temperature, emotions, intensity highlights, etc. Appropriate syntax would thus determine the appropriate parameters related to these effects.

Reference to "one embodiment" or "an embodiment" or "one implementation" or "an implementation", as well as other variations thereof, mean that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout the specification are not necessarily all referring to the same embodiment.

Additionally, this application or its claims may refer to "determining" various pieces of information. Determining the information may include one or more of, for example, estimating the information, calculating the information, predicting the information, or retrieving the information from memory.

Additionally, this application or its claims may refer to "obtaining" various pieces of information. Obtaining is, as with "accessing", intended to be a broad term. Obtaining the information may include one or more of, for example, receiving the information, accessing the information, or retrieving the information (for example, from memory or optical media storage). Further, "obtaining" is typically involved, in one way or another, during operations such as, for example, storing the information, processing the information, transmitting the information, moving the information, copying the information, erasing the information, calculating the information, determining the information, predicting the information, or estimating the information. This application or its claims may refer to "device" or "apparatus" interchangeably.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as readily apparent by one of ordinary skill in this and related arts, for as many items listed.

## Claims

1. A method comprising:
obtaining haptic elements associated with a content, the haptic elements comprising at least one haptic source, at least one haptic medium, and at least one haptic listener,
obtaining one or more haptic layer associated with at least one of a haptic source, a haptic medium or a haptic listener,
for a haptic listener, selecting a set of haptic mediums that allows to establish a link between the at least one haptic source and the haptic listener,
for a haptic medium and for a haptic layer:
selecting a propagation function associated with the haptic layer, and determining a haptic effect resulting of the application of the propagation function on the at least one haptic source to the haptic listener, and
providing the haptic effect to a haptic rendering engine,
wherein the haptic elements are associated with a spatial localization within a scene.

2. The method of claim 1, wherein a haptic source generates a haptic signal, a haptic listener captures the haptic signal as propagated from the haptic source through at least one haptic medium and wherein a propagation function is associated with a haptic layer.

3. The method of any of claim 1 or 2, wherein the set of haptic mediums are selected based on geometric information comprising the spatial localization and shape of the haptic sources, the spatial localization and shape of the haptic listeners, the spatial localization and shape of the haptic mediums and propagation characteristics of the haptic mediums.

4. The method of any of claim 1 to 3, wherein a haptic medium is associated with a propagation function.

5. The method of any of claim 1 to 4, wherein the one or more haptic layer is associated with a haptic source, and wherein

6. The method of any of claim 1 to 4, wherein the one or more haptic layer is associated with a haptic medium, and wherein

7. The method of any of claim 1 to 4, wherein the one or more haptic layer is associated with a haptic listener, and wherein

8. An apparatus comprising a processor configured to:
obtain haptic elements associated with a content, the haptic elements comprising at least one haptic source, at least one haptic medium, and at least one haptic listener,
obtain one or more haptic layer associated with at least one of a haptic source, a haptic medium or a haptic listener,
for a haptic listener, select a set of haptic mediums that allows to establish a link between the at least one haptic source and the haptic listener,
for a haptic medium and for a haptic layer:
select a propagation function associated with the haptic layer, and determine a haptic effect resulting of the application of the propagation function on the at least one haptic source to the haptic listener, and
provide the haptic effect to a haptic rendering engine,
wherein the haptic elements are associated with a spatial localization within a scene.

9. A non-transitory computer readable medium comprising data elements for describing at least one haptic scene, the data elements comprising at least one haptic source, at least one haptic medium, at least one haptic listener, and at least one haptic layer associated with at least one of a haptic source, a haptic medium or a haptic listener, and wherein haptic sources, haptic mediums, haptic listeners are associated with spatial localizations within the haptic scene.

10. A computer program comprising program code instructions for implementing the method according to any of claims 1 to 7 when executed by a processor.

11. A non-transitory computer readable medium comprising program code instructions for implementing the method according to any of claims 1 to 7 when executed by a processor.
